# FASCICULE DE BREVET EUROPEEN

(11) **EP 4 204 954 B1**
(45) Date de publication et mention de la délivrance du brevet: **03.09.2025**
(21) Numéro de dépôt: 21751547.7
(22) Date de dépôt: 27.07.2021
(51) Int. Cl.: G06F 8/65, H04L 67/12, G06F 21/57, H04L 9/32, H04L 9/40, H04L 67/00

(54) **PROCÉDÉ POUR UNE MODIFICATION LOGICIELLE DANS UN VÉHICULE AUTOMOBILE**
METHOD FOR MODIFYING A FIRMWARE IN A AUTOMOBILE VEHICLE
VERFAHREN ZUR ÄNDERUNG DER PROGRAMME IN EINEN AUTOMOBIL FAHRZEUG

(30) Priorité: 26.08.2020 FR 2008706
(43) Date de publication de la demande: 05.07.2023
(73) Titulaire: Ampere SAS, 92100 Boulogne-Billancourt (FR)
(72) Inventeur: BESSIERE, Sébastien, 31170 TOURNEFEUILLE (FR); DEVREESE, Arnaud, 31490 leguevin (FR); DRAVIGNY, Thibaud, 75015 Paris (FR); FRADIN, Benoit, 31470 FONSORBES (FR)
(74) Mandataire: Renault Group
(86) Numéro de dépôt international: PCT/EP2021/071041
(87) Numéro de publication internationale: WO 2022/042981

(56) Documents cités:
- WO-A1-2019/126525
- DE-A1- 102016 210 672
- US-A1- 2017 060 559
- US-B1- 10 447 483

## Description

### [Domaine technique

La présente invention concerne un procédé pour une modification logicielle dans un véhicule automobile, un calculateur automobile, un produit programme d'ordinateur pour la mise en œuvre du procédé ainsi qu'un support de stockage amovible.

### Technique antérieure

Les véhicules automobiles actuels comprennent un grand nombre de détecteurs, de dispositifs et/ou de systèmes qui sont capables d'assister un conducteur dans ses opérations de conduites, par exemple lors d'une conduite d'un véhicule autonome ou semi-autonome. De tels détecteurs sont par exemples une ou plusieurs caméras, des détecteurs infrarouges, des détecteurs en radio fréquence, un système LIDAR (pour « Light Imaging Detection and Ranging » en anglais) etc.... Ces détecteurs sont disposés à l'intérieur du véhicule et/ou à l'extérieur de celui-ci. Afin d'exploiter ces différents capteurs, le véhicule automobile intègre dans ses calculateurs une pluralité de logiciels embarqués ou firmware. Ces logiciels embarqués permettent au calculateur d'évoluer, par exemple en intégrant de nouvelles fonctionnalités, sans avoir besoin de revoir complètement le design dudit calculateur. Il est ainsi parfois nécessaire de mettre à jour ces logiciels embarqués ou d'intégrer de nouveaux logiciels dans le véhicule automobile. Le document WO2019126525 divulgue un procédé de mise à jour logicielle au sein d'un véhicule automobile. Dans ce procédé, les données à mettre à jour sont cryptées à l'aide d'une clé spécifique puis transmises au véhicule automobile. Les données transmises sont ensuite décryptées dans ledit véhicule automobile via une clé privée. Bien que ce procédé permette une mise à jour sécurisée des logiciels embarqués, le véhicule automobile reste globalement passif vis-à-vis de cette mise à jour. En effet, il ne lui est pas possible de refuser la mise à jour, par exemple, si celle-ci n'est pas compatible avec les caractéristiques propres de ce véhicule automobile ou si celle-ci ne correspond pas à un contexte de mise à jour prédéfini (lieu de la mise à jour, période de la mise à jour, exécutant de la mise à jour (ingénierie, usine, concessionnaire, client final)). En effet, dans le cadre d'une mise à jour d'un logiciel embarqué dans un véhicule automobile deux autorités de contrôle sont généralement impliquées. La première autorité de contrôle dite autorité de contrôle principale est celle qui fournit les données logicielles à mettre à jour, c'est typiquement le constructeur du véhicule automobile. Cette autorité de contrôle principale définit les politiques d'applicabilité et de sécurité qui doivent être respectées. Ces politiques doivent être facilement configurables par une seconde autorité de contrôle, dite autorité de contrôle secondaire qui est responsable du déploiement des mises à jour. La contrainte opérationnelle est que l'autorité de contrôle principale générant les données logicielles et l'autorité de contrôle secondaire chargée de déployer ces données logicielles ne sont pas physiquement les mêmes. Ainsi, des attaquants (au sens cyber-sécurité) pourraient modifier le contenu des données logicielles ou les propriétés de déploiement de ces contenus ce qui pourrait déclencher des problèmes d'exécution des données logicielles ainsi modifiées dans le véhicule automobile. Un autre système de mise à jour de logiciel est décrit dans US2017060559.

Il existe donc un besoin d'améliorer la sécurité dans la modification de logiciels embarqués dans les véhicules automobiles, notamment lorsque le contexte de cette modification comporte un certain nombre de restrictions telles que des restrictions d'espace ou de temps.

### Exposé de l'invention

La présente invention vise à remédier au moins en partie à ce besoin.

Plus particulièrement, la présente invention vise à sécuriser les mises à jour logicielles dans un véhicule automobile notamment lorsque plusieurs entités sont chargées de mettre en oeuvre ces mises à jour.

Un premier objet de l'invention concerne un procédé pour une modification logicielle dans un véhicule automobile, ledit procédé comprenant les étapes suivantes :
- une étape de réception d'un premier groupe de données et d'un second groupe de données, ledit premier groupe de données comprenant des données logicielles, des données générales de déploiement logiciel, lesdites données générales de déploiement logiciel ayant été signées par une autorité de contrôle principale, ledit second groupe de données comprenant des données spécifiques de déploiement logiciel, lesdites données spécifiques de déploiement logiciel ayant été signées par une autorité de contrôle secondaire ;
- une première étape de vérification de la signature des données spécifiques de déploiement logiciel ;
- le véhicule automobile comportant des caractéristiques propres, une seconde étape de vérification de la compatibilité des données spécifiques de déploiement logiciel avec lesdites caractéristiques propres du véhicule automobile ;
- une troisième étape de vérification de la signature des données générales de déploiement logiciel ;
- une quatrième étape de vérification de la compatibilité des données spécifiques de déploiement logiciel avec les données générales de déploiement logiciel ;
- si la première étape de vérification, la seconde étape de vérification, la troisième étape de vérification et la quatrième étape de vérification sont validées, une étape de modification logicielle dans le véhicule automobile via les données logicielles du premier groupe de données.

L'invention permet de créer une signature à double niveau en séparant les rôles des différentes autorités de contrôle principale et secondaire. L'autorité de contrôle principale est ainsi chargée de la signature numérique des données logicielles. Cette autorité principale génère également des données générales de déploiement également appelées permissions de déploiement. L'autorité de contrôle secondaire gère quant à elle le déploiement effectif des données logicielles. Cette autorité de contrôle secondaire est en charge d'apporter les politiques effectives de déploiement et de les signer numériquement. Elle ajoute ainsi des informations dont elle a la charge qui viennent compléter les permissions de déploiement de l'autorité de contrôle principale. Le calculateur automobile va alors vérifier que les signatures numériques mais aussi que les politiques effectives de déploiement sont conformes aux permissions de déploiement et aux caractéristiques propres du véhicule automobile. Ainsi, l'invention permet une séparation cryptographique des privilèges en amont entre l'autorité de contrôle principale et l'autorité de contrôle secondaire. Elle permet également d'effectuer une vérification en aval dans le calculateur implémentant la modification logicielle. Ce procédé apporte en outre une grande flexibilité dans ladite modification logicielle. En effet, les permissions de déploiement sont fixées de manière intangible par l'autorité de contrôle principale. Les données spécifiques de déploiement peuvent quant à elle être adaptées par l'autorité de contrôle secondaire, par exemple, en cas de retour d'un défaut logiciel sur une gamme de véhicule donnée, ce sont les véhicules de cette gamme qui vont être spécifiquement visés par une modification logicielle.

Dans un mode de réalisation particulier, les données générales de déploiement du logiciel comprennent au moins un des critères suivants pour le déploiement du logiciel :
- un critère général d'espace pour le déploiement logiciel ;
- un critère général de temps pour le déploiement logiciel ;
- un critère général d'identification pour l'identification des véhicules concernés par le déploiement logiciel.

L'utilisation de tout ou partie de ces critères généraux permet de constituer des permissions de déploiement définissant un cadre de déploiement logiciel assez large.

Dans un mode de réalisation particulier, les données spécifiques de déploiement du logiciel comprennent au moins un des critères suivants :
- un critère spécifique d'espace pour le déploiement logiciel ;
- un critère spécifique de temps pour le déploiement logiciel ;
- un critère spécifique d'identification pour l'identification des véhicules concernés par le déploiement logiciel.

L'utilisation de tout ou partie de ces critères spécifiques permet de constituer des politiques effectives de déploiement définissant un cadre de déploiement logiciel assez précis.

Dans un mode de réalisation particulier, le critère général d'espace définit les lieux possibles dans lesquels le déploiement logiciel peut être effectif, tel que dans une usine, chez un concessionnaire, ou chez un particulier, et le critère spécifique d'espace est un choix parmi ces différents lieux.

Dans un mode de réalisation particulier, le critère général de temps définit les plages temporelles dans lesquelles le déploiement logiciel peut être effectif, et le critère spécifique d'espace est un choix parmi ces différentes plages temporelles.

Dans un mode de réalisation particulier, le critère général d'identification définit un type d'identifiant, tel qu'un numéro d'identification du véhicule et le critère spécifique d'identification est un choix d'un groupe d'identifiants pour ce type d'identifiant.

Le type d'identification utilisé est par exemple un numéro d'identification également appelé code VIN (pour « Vehicule Identification Number » en anglais). Le code VIN est un code alphanumérique unique qui est donné à chaque véhicule. Ce code est normalisé et il comporte 17 caractères. Il est présent au moins deux fois sur le véhicule, par exemple sur une partie du châssis du véhicule ou sur la plaque constructeur. Il est intégré également dans le calculateur automobile et il constitue un élément des caractéristiques propres du véhicule automobile.

Dans un mode de réalisation particulier, les données générales de déploiement logiciel comprennent une empreinte numérique des données logicielles, ladite empreinte numérique ayant été obtenue par une fonction de hachage et dans lequel cette empreinte numérique est comparée avec une empreinte numérique générée dans le véhicule automobile à partir des données logicielles pour la mise en œuvre de l'étape de modification logicielle.

La fonction de hachage utilisée est par exemple une fonction cryptographique de type SHA (pour « Secure Hash Algorithm » en anglais) ou MD5 (pour « Message Digest 5 » en anglais). Ce sont des fonctions qui pour un ensemble de données d'entrée vont générer une empreinte numérique unique. Ainsi pour deux ensembles de données d'entrée différentes, deux empreintes numériques différentes seraient générées par la fonction de hachage. Dès lors toute altération des données d'entrée entraîne alors la génération d'une empreinte numérique différente par la fonction de hachage. De cette manière, il suffit de vérifier l'intégrité de l'empreinte numérique pour évaluer si les données logicielles ont fait l'objet ou non d'une modification malveillante. Il n'est pas nécessaire de vérifier l'intégrité de la totalité des données logicielles. On facilite alors le traitement des données pour la modification logicielle dans le véhicule automobile.

Dans un mode de réalisation particulier, les données générales de déploiement logiciel sont signées avec une première clé privée et la vérification de ladite signature est réalisée avec une première clé publique associée à ladite première clé privée. Les données spécifiques de déploiement logiciel sont signées avec une seconde clé privée et la vérification de ladite signature est réalisée avec une seconde clé publique associée à ladite seconde clé privée.

La première clé privée est détenue par l'autorité de contrôle principale. La seconde clé privée est détenue par l'autorité de contrôle secondaire. La première clé publique et la seconde clé publique sont disposées dans le calculateur du véhicule automobile lors de la fabrication dudit véhicule automobile. Par l'utilisation de la cryptographie asymétrique, on s'assure d'une transmission sécurisée de données entre d'une part l'autorité de contrôle principale et l'autorité de contrôle secondaire et d'autre part le véhicule automobile. En outre, quand bien même la première clé publique et la seconde clé publique seraient cassées par un acteur malveillant, celui-ci ne pourrait pas remonter à la première clé privée et à la seconde clé privée détenues respectivement par l'autorité de contrôle principale et par l'autorité de contrôle secondaire.

Dans un mode de réalisation particulier, la modification logicielle est l'introduction d'un nouveau logiciel et/ou la mise à jour d'un logiciel déjà embarqué dans ledit véhicule.

Dans un mode de réalisation particulier, la réception du premier groupe de données et la réception du second groupe de données se font par une connexion avec ledit véhicule automobile d'un support de stockage amovible, tel qu'une clé USB et les données spécifiques de déploiement du logiciel comprennent au moins un critère lié audit support de stockage amovible.

L'utilisation d'un support de stockage amovible permet de transmettre de manière sécurisée une plus grande quantité de données par rapport à une technologie sans fil de type FOTA (pour « Firmware Over-the-air » en anglais). En outre, il n'est pas nécessaire que le véhicule automobile soit un véhicule connecté à distance pour pouvoir faire des mises à jour logicielles. Enfin, l'utilisation d'un support de stockage amovible permet d'éviter les attaques malveillantes de type attaque par déni de service distribuée DDOS (pour « Distributed Denial of Service attack » en anglais).

Un autre objet de l'invention concerne un calculateur automobile comprenant des moyens de réception d'un premier groupe de données et d'un second groupe de données. Ledit premier groupe de données comprend des données logicielles, des donnés générales de déploiement logiciel, lesdites données générales de déploiement logiciel ayant été signées par une autorité de contrôle principale. Ledit second groupe de données comprend des données spécifiques de déploiement logiciel, lesdites données spécifiques de déploiement logiciel ayant été signées par une autorité de contrôle secondaire. Le calculateur comprend des moyens de vérification de la signature des données spécifiques de déploiement logiciel. Le véhicule automobile comportant des caractéristiques propres, le calculateur comprend des moyens de vérification de la compatibilité des données spécifiques de déploiement logiciel avec lesdites caractéristiques propres du véhicule automobile. Le calculateur comprend des moyens de vérification de la signature des données générales de déploiement logiciel, des moyens de vérification de la comptabilité des données spécifiques de déploiement logiciel avec les données générales de déploiement logiciel, des moyens de modification logicielle dans le véhicule automobile via les données logicielles du premier groupe de données.

Un autre objet de l'invention concerne un produit programme d'ordinateur comportant des instructions de programme exploitables par le calculateur automobile précédent, qui lorsqu'elles sont exécutées ou interprétées par ledit calculateur déclenchent la mise en œuvre du procédé précédent pour une modification logicielle dans un véhicule automobile.

Un autre objet de l'invention concerne un support de stockage amovible comprenant des moyens de stockage d'un premier groupe de données et d'un second groupe de données, ledit premier groupe de données comprenant des données logicielles, des données générales de déploiement logiciel, lesdites données générales de déploiement logiciel ayant été signées par une autorité de contrôle principale, ledit second groupe de données comprenant des données spécifiques de déploiement logiciel, lesdites données spécifiques de déploiement logiciel ayant été signées par une autorité de contrôle secondaire. Le support de stockage comprend des moyens de transfert du premier groupe de données et du second groupe de données vers le véhicule automobile, la signature des données spécifiques de déploiement logiciel étant destinée à être vérifiée dans ledit véhicule automobile dans une première étape de vérification, les données spécifiques de déploiement du logiciel étant destinées à être vérifiées pour évaluer leur compatibilité avec des caractéristiques propres du véhicule automobile dans une seconde étape de vérification, la signature des données générales de déploiement logiciel étant destinée à être vérifiée dans ledit véhicule automobile dans une troisième étape de vérification, les données spécifiques de déploiement logiciel et les données générales de déploiement logiciel étant destinées à être vérifiées pour évaluer leur compatibilité dans une quatrième étape de vérification. Les données logicielles du premier groupe de données étant destinées à effectuer une modification logicielle dans le véhicule automobile si la première étape de vérification, la seconde étape de vérification, la troisième étape de vérification et la quatrième étape de vérification sont validées.

La présente invention sera mieux comprise à la lecture de la description détaillée de modes de réalisation pris à titre d'exemples nullement limitatifs et illustrés par les dessins annexés sur lesquels :
**[****Fig 1****]** la figure 1 est une vue schématique illustrant un véhicule automobile comportant un calculateur selon l'invention ;
**[****Fig 2****]** la figure 2 est une vue schématique détaillant les composants du calculateur de la figure 1 ;
**[****Fig 3****]** la figure 3 est une vue schématique d'une architecture pour la mise en œuvre d'un procédé pour une modification logicielle dans le véhicule automobile de la figure 1 :
**[****Fig 4****]** la figure 4 illustre les différentes étapes du procédé pour une modification logicielle dans le calculateur de la figure 2.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

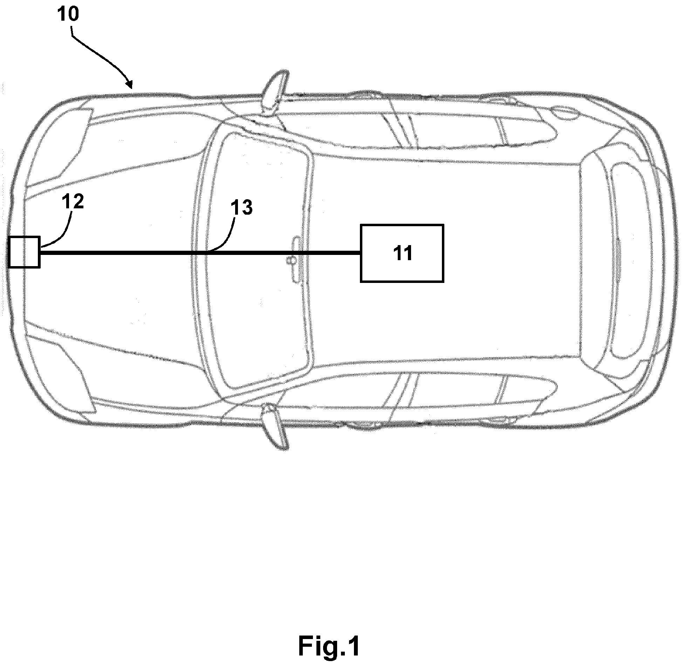

La figure 1 représente schématiquement un véhicule automobile 10. Ce véhicule automobile 10 comprend un calculateur 11 et une pluralité d'Unités de Contrôle Electronique ECU (pour « Electronic Control Unit » en anglais) dont une seule est ici représentée 12 ainsi qu'un réseau de communication 13 pour la communication entre le calculateur 11 et les ECU 12. L'ECU 12 permet, par exemple, de contrôler une caméra située à l'avant du véhicule automobile 10. Dans un mode de réalisation particulier, cette caméra est adaptée pour mesurer les distances avec les autres acteurs réels (voitures, piétons, animaux, etc...) autour du véhicule automobile 10. Cette mesure est une télédétection par laser ou LIDAR (pour « LIght Detection And Ranging » en anglais). La télédétection par laser est une technique de mesure à distance fondée sur l'analyse des propriétés d'un faisceau de lumière renvoyé vers son émetteur. L'ECU 12 est également adapté pour transmettre ces informations de distance par le réseau de communication 13 au calculateur 11 qui va alors les traiter. Le calculateur 11 comprend un certain nombre de firmwares pour le fonctionnement de la caméra. Ces firmwares doivent être mis à jour et/ou remplacés régulièrement pour optimiser le fonctionnement de cette caméra.

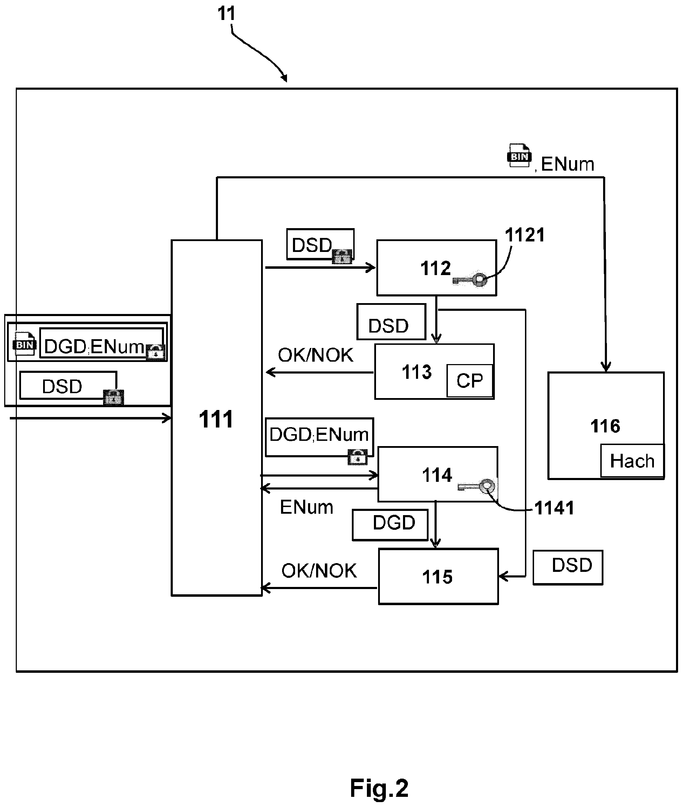

La figure 2 détaille les composants du calculateur 11 pour une modification logicielle dans le véhicule automobile. Ce calculateur 11 comprend ainsi :
- des moyens de réception 111 de données ;
- des premiers moyens de vérification 112 ;
- des second moyens de vérification 113 ;
- des troisième moyens de vérification 114 ;
- des quatrième moyens de vérification 115 ;
- des moyens de modification logicielle 116.

Les moyens de réception 111 de données sont adaptés pour recevoir un premier groupe de données. Le premier groupe de données comprend : des données logicielles BIN, une empreinte numérique Enum des données logicielles, des données générales de déploiement logiciel DGD. Les données logicielles BIN correspondent aux lignes de code de mise à jour du firmware existant et/ou du nouveau firmware à installer dans le véhicule automobile. L'empreinte numérique Enum correspond au résultat d'une fonction de hachage appliquée sur les données logicielles BIN.

Les données générales de déploiement logiciel DGD comprennent au moins un des critères suivants pour le déploiement logiciel :
- un critère général d'espace CGE pour le déploiement logiciel ;
- un critère général de temps CGT pour le déploiement logiciel ;
- un critère général d'identification CGI pour l'identification des véhicules concernés par le déploiement logiciel.

Le critère général d'espace CGE définit les lieux possibles dans lesquels le déploiement logiciel peut être effectif, tel que dans une usine, chez un concessionnaire, ou chez un particulier.

Le critère général de temps CGT définit les plages temporelles dans lesquelles le déploiement logiciel peut être effectif.

Le critère général d'identification CGI définit un type d'identifiant sur lequel va pouvoir se baser le déploiement logiciel. Dans un mode de réalisation particulier ce type d'identifiant est le code VIN du véhicule automobile ou une partie de ce code VIN.

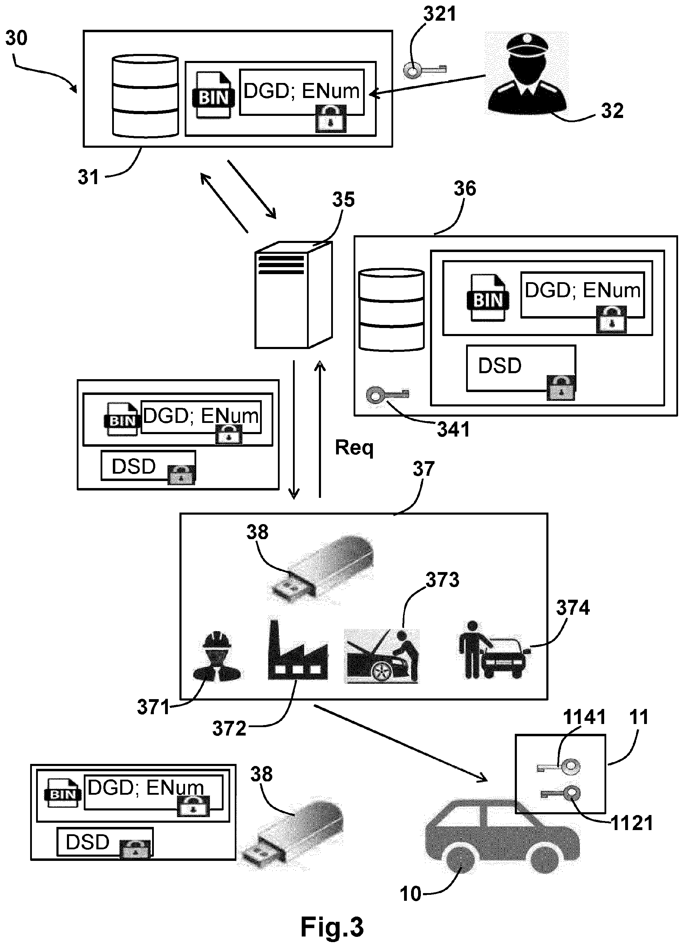

Les données générales de déploiement logiciel DGD sont adaptées pour être signées par une autorité de contrôle principale 32 (voir figure 3).

Les moyens de réception 111 de données sont également adaptés pour recevoir un second groupe de données. Le second groupe de données comprend : des données spécifiques de déploiement logiciel DSD. Les données spécifiques de déploiement logiciel DSD comprennent au moins un des critères suivants :
- un critère spécifique d'espace CSE pour le déploiement logiciel ;
- un critère spécifique de temps CST pour le déploiement logiciel ;
- un critère spécifique d'identification CSI pour l'identification des véhicules concernés par le déploiement logiciel.

Le critère spécifique d'espace CSE pour le déploiement logiciel est un ou plusieurs choix parmi les différents lieux du critère général d'espace CGE du premier groupe de données.

Le critère spécifique de temps CST pour le déploiement logiciel est un ou plusieurs choix parmi les différentes plages temporelles du critère général de temps CGT du premier groupe de données.

Le critère spécifique d'identification CSI pour l'identification des véhicules d'identification est un choix d'un groupe d'identifiants pour le type d'identifiant du critère général d'identification CGI du premier groupe de données.

Les données spécifiques de déploiement logiciel DSD sont adaptées pour être signées par une autorité de contrôle secondaire 34 (voir figure 3).

Les premiers moyens de vérification 112 sont adaptés pour vérifier la signature de données du second groupe de données.

Les seconds moyens de vérification 113 sont adaptés pour vérifier la compatibilité des données spécifiques de déploiement DSD avec des caractéristiques propres CP du véhicule automobile. Ces caractéristiques propres comprennent par exemple le code VIN particulier du véhicule automobile.

Les troisièmes moyens de vérification 114 sont adaptés pour vérifier la signature de données du premier groupe de données.

Les quatrièmes moyens de vérification 115 sont adaptés pour vérifier la compatibilité des données spécifiques de déploiement logiciel DSD avec les données générales de déploiement logiciel DGD.

Les moyens de modification logicielle 116 sont adaptés pour ajouter un ou plusieurs firmwares et/ou mettre à jour un ou plusieurs firmwares à partir des données logicielles BIN du premier groupe de données.

Dans un exemple de fonctionnement non limitatif décrit à la figure 2, le calculateur 11 reçoit les premières données BIN, DGD (CGE, CGT, CGI), ENum et les secondes données DSD (CSE, CST, CSI) au niveau des moyens de réception 111. Les données DGD (CGE, CGT, CGI), ENum des premières données ont été préalablement signées par une première clé privée 321 (voir figure 3) et les données DSD (CSE, CST, CSI) des secondes données ont été préalablement signées par une seconde clé privée 341 (voir figure 3). Les moyens de réception 111 transmettent les données DSD (CSE, CST, CSI) aux premiers moyens de vérification 112. Ces premiers moyens de vérification 112 comprennent une seconde clé publique 1121 complémentaire de la seconde clé privée 341 (voir figure 3). A partir de cette seconde clé publique 1121, les premiers moyens de vérification 112 vont déchiffrer la signature des données DSD (CSE, CST, CSI). Si le déchiffrage fonctionne, alors les données DSD (CSE, CST, CSI) sont transmises aux seconds moyens de vérification 113 et aux quatrièmes moyens de vérification 115. Si le déchiffrage ne fonctionne pas, alors le calculateur 11 déduit que les données DSD (CSE, CST, CSI) n'ont pas été signées par le bon acteur. Dès lors, le processus pour une modification logicielle se termine. Les seconds moyens de vérification 113 comprennent les caractéristiques propres CP du véhicule automobile. Ces caractéristiques propres CP sont comparées aux données DSD (CSE, CST, CSI). Par exemple, le code VIN du véhicule automobile est comparé à la liste des codes VIN présents dans le critère spécifique d'identification CSI. Si ce code VIN se retrouve dans cette liste, les seconds moyens de vérification envoient un message OK aux moyens de réception 111 pour poursuivre le processus pour la modification logicielle. Dans le cas contraire, un message NOK est transmis auxdits moyens de réception 111 et le processus se termine. Les moyens de réception 111 transmettent ensuite les données DGD (CGE, CGT, CGI), ENum préalablement signées par la première clé privée 321, aux troisièmes moyens de vérification 114. Ces troisièmes moyens de vérification 114 comprennent une première clé publique 1141 complémentaire à la première clé privée 321. A partir de cette première clé publique 1141, les troisièmes moyens de vérification 114 vont déchiffrer la signature des donnés DGD (CGE, CGT, CGI), Enum. Si le déchiffrage fonctionne alors les données DGD (CGE, CGT, CGI) sont transmises aux quatrièmes moyens de vérification 115 et la signature numérique Enum est transmise aux moyens de réception 111. Si le déchiffrage ne fonctionne pas, alors le calculateur 11 déduit que les données DGD (CGE, CGT, CGI), Enum n'ont pas été signées par le bon acteur et le processus de modification logicielle s'arrête. Les quatrièmes moyens de vérification 115 vont vérifier la compatibilité des données spécifiques de déploiement logiciel DSD (CSE, CST, CSI) préalablement transmises par les premiers moyens de vérification 112 avec les données générales de déploiement logiciel DGD (CGE, CGT, CGI). Par exemple, les quatrièmes moyens de vérification 115 vont analyser si le groupe d'identifiants du critère CSI appartient bien au type d'identifiant du critère CGI. Si le groupe d'identifiant appartient bien à ce type d'identifiant, les seconds moyens de vérification envoient un message OK aux moyens de réception 111. Ces moyens de réception 11 vont alors transmettre les données logicielles BIN et la signature numérique ENum aux moyens de modification logicielle 116. Dans le cas contraire, un message NOK est transmis auxdits moyens de réception 11 et le processus se termine. Les moyens de modification logicielle 116 comprennent une fonction de hachage Hach. Cette fonction Hach est identique à la fonction de hachage qui a initialement généré l'empreinte numérique ENum. Ainsi, les moyens de modification logicielle 116 appliquent cette fonction Hach aux données logicielles BIN. Dans le cas où le résultat de cette opération est identique à l'empreinte numérique ENum, le calculateur 11 déduit que les données logicielles BIN n'ont pas fait l'objet d'une altération par un acteur malveillant au cours de leur transmission et qu'une modification logicielle peut être enclenchée dans le véhicule automobile. Dans le cas contraire, la modification logicielle dans le véhicule automobile n'a pas lieu.

La figure 3 illustre une architecture globale 30 pour la mise œuvre d'une modification logicielle dans le véhicule automobile. Cette architecture globale 30 comprend :
- une base de données 31 pour le stockage de données logicielles et de données générales de déploiement logiciel ;
- un serveur 35 ;
- des moyens de génération d'une requête de téléchargement 37 ;
- le calculateur 11 du véhicule automobile 10.

La base de données 31 est adaptée pour stocker un premier groupe de données. Comme il a déjà été indiqué, ce premier groupe de données comprend des données logicielles BIN et des données générales de déploiement DGD (CGE, CGT, CGI). Les données logicielles BIN ont été préalablement générées par un fournisseur du logiciel en question. Les données DGD (CGE, CGT, CGI) ont été préalablement générées et signées par une autorité de contrôle principale 32. Cette signature est réalisée à partir de la première clé privé 321. Cette autorité de contrôle principale 32 est gérée par un officier de sécurité principal et un responsable du firmware (non représentés sur la figure 3). Ceux-ci ont la possibilité de définir les permissions de déploiement avec différents critères de type :
- permission 1 : le firmware peut être déployé avec une sécurisation au code VIN (critère général d'identification) ;
- permission 2 : le firmware peut être déployé pour une gamme de véhicules données (critère général d'identification) ;
- permission 3 :le firmware peut être déployé en usine, chez un concessionnaire ou chez le client (critère général de lieu) ;
- permission 4 : le firmware peut être déployé en phase de développement, lors d'une mise à jour usine (véhicule ayant moins de 10 Km au compteur), en phase d'utilisation (critère général de temps) ;

On notera que certaines permissions sont la combinaison d'un critère général d'identification/de lieu/de temps avec un critère spécifique d'identification/de lieu/de temps telles que :
- permission 5 : le firmware peut être déployé chez le client (critère spécifique de lieu) avec une sécurisation au code VIN (critère général d'identification) ;
- permission 6 : le firmware ne peut être déployé qu'en phase de développement (critère spécifique de temps) pour une gamme de véhicule donnée (critère général d'identification).

Le serveur 35 est adapté pour interroger la base de donnée 31 afin d'associer les données du premier groupe de données BIN, DGD (CGE, CGT, CGI), ENum à des données d'un second groupe de données DSD (CSE, CST, CSI) dans une seule base de données 36. Les données du second groupe de données DSD (CSE, CST, CSI) sont générées à la volée sur la base d'une requête REQ provenant des moyens de génération 37. Ces données DSD (CSE, CST, CSI) sont signées à partir de la seconde clé privée 341.

C'est le responsable chargé du déploiement logiciel (non représenté sur la figure 3) via le serveur 35 qui va s'assurer lors de la génération du second groupe de données DSD (CSE, CST, CSI) de leur cohérence par rapport au premier groupe de données BIN, DGD (CGE, CGT, CGI).

C'est ce responsable chargé du déploiement logiciel qui a la possibilité de définir les politiques effectives de déploiement. Plus particulièrement, dans le cas où le déploiement va se faire par un support de stockage amovible, tel qu'une clé USB 38, les politiques effectives de déploiement sont, à titre d'exemple et de manière non exhaustive, du type :
- politique 1 : la clé USB 38 n'est applicable en concession que pour le code VIN VINx ;
- politique 2 : la clé USB 38 ne peut être appliquée que dans les 10 jours suivant sa création.

Les moyens de génération 37 sont adaptés pour générer la requête REQ à destination du serveur 35 pour une modification logicielle. Cette requête est générée à l'initiative d'un utilisateur tel qu'un département de recherche du constructeur 371, une usine du constructeur 372, un concessionnaire 373 ou le client 374 du véhicule automobile 10. La requête REQ est, par exemple, une requête conforme au protocole Internet http (pour « Hyper Text Transfer Protocol », en anglais). En retour, les moyens de génération 37 transmettent le premier groupe de données BIN, DGD (CGE, CGT, CGI), ENum et le second groupe de données DSD (CSE, CST, CSI) à la demande de mise à jour logicielle. Dans un mode de réalisation particulier, la requête REQ comprend un code secret préalablement obtenu par l'utilisateur afin de sécuriser le transfert du premier groupe de données et du second groupe de données du serveur 35 vers les moyens de génération 37.

Le premier groupe de données et le second groupe de données sont ensuite stockés sur la clé USB 38. Cette clé USB 38 est, par exemple, une clé quelconque du commerce. En variante, la clé USB 38 est dédiée à des opérations de modification logicielle. Cette clé USB 38 a par exemple été préalablement fournie par le constructeur du véhicule automobile 10.

La clé USB 38 comprend ainsi des moyens de stockage du premier groupe de données et du second groupe de données. La clé USB 38 comprend également des moyens de transfert de ce premier groupe de données BIN, DGD (CGE, CGT, CGI), ENum et de ce second groupe de données DSD (CSE, CST, CSI) vers le calculateur 11 du véhicule automobile 10. Comme il a déjà été précisé, ce calculateur 11 comprend la première clé publique 1141 complémentaire à la première clé privée 321 et la seconde clé publique 1121 complémentaire à la seconde clé privée 341.

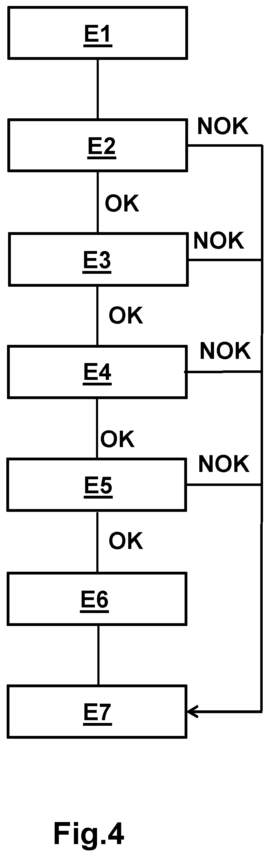

Le calculateur 11 permet ainsi la mise en œuvre du procédé pour la modification logicielle dans le véhicule automobile 10. Les étapes de ce procédé sont notamment illustrées à la figure 4. Le procédé comprend ainsi une étape E1 de réception du premier groupe de données BIN, DGD (CGE, CGT, CGI), ENum et du second groupe de données DSD (CSE, CST, CSI). Le procédé présente ensuite une succession d'étapes de vérification. Dans une première étape de vérification E2, la signature de données du second groupe de données DSD (CSE, CST, CSI) est vérifiée. Si cette signature est conforme (OK), le procédé passe à une seconde étape de vérification E3. Dans le cas contraire (NOK), le procédé pour la modification logicielle est stoppé dans une étape E7. Dans la seconde étape de vérification E3, la compatibilité des données spécifiques de déploiement logiciel DSD est comparée aux caractéristiques propres CP du véhicule automobile 10. Si la compatibilité est conforme (OK), le procédé passe à une troisième étape de vérification E4. Dans le cas contraire (NOK), le procédé pour la modification logicielle est stoppé dans une étape E7. Dans la troisième étape de vérification E4, la signature de données du premier groupe de données DGD (CGE, CGT, CGI), ENum est vérifiée. Si cette signature est conforme (OK), le procédé passe à une quatrième étape de vérification E5. Dans le cas contraire (NOK), le procédé pour la modification logicielle est stoppé dans une étape E7. Dans la quatrième étape de vérification E5, la compatibilité des données spécifiques de déploiement logiciel est comparée aux données générales de déploiement logiciel. Si la compatibilité est conforme (OK), une modification logicielle dans le véhicule automobile via les données logicielles BIN du premier groupe de données est enclenchée dans une étape E6. Dans le cas contraire (NOK), le procédé pour la mise à jour logiciel est stoppé dans une étape E7.

Ainsi, en reprenant les exemples permission 1 à permission 6 et les exemples politique 1 et politique 2 des paragraphes précédents, le calculateur 11 va vérifier la cohérence de l'ensemble à savoir :
- que la signature des données du premier groupe de données et la signature des données du second groupe de données sont valides, c'est-à-dire que la première clé privée et la seconde clé privée sont valides et connues ;
- que le responsable chargé du déploiement logiciel a bien mis un code VIN correspondant au véhicule (permission 1, politique 1 et caractéristiques propres CP du véhicule automobile) ;
- que le véhicule automobile possède un firmware (permission 4 et caratéristiques propres CP du véhicule automobile) ;
- que le véhicule est en concession ( permission 3, politique 1 et caractéristiques propres CP du véhicule automobile).

L'invention permet ainsi de compléter, par des politiques de déploiement appropriées, les permissions de déploiement générées par l'autorité de contrôle principale. En outre, le responsable chargé du déploiement logiciel peut spécifier une politique de déploiement toute en s'assurant qu'elle soit compatible avec les permissions de déploiement imposées par l'autorité de contrôle principale.

Le calculateur 11 est alors responsable de la vérification de la cohérence entre les politiques de déploiement des données logicielles et les permissions de déploiement de ces données logicielles. Le calculateur 11 autorisera l'installation d'un nouveau logiciel ou la mise à jour d'un logiciel uniquement si la politique de déploiement de ce logiciel ou de cette mise à jour est autorisée par les permissions de déploiement.

Dans un mode de réalisation préférentiel, le calculateur 11 génère une empreinte numérique à partir des données logicielles BIN. Cette empreinte numérique générée est comparée à l'empreinte numérique ENum des données logicielles du premier groupe de données. Dans le cas où les empreintes numériques sont identiques la modification logicielle est autorisée. Dans le cas contraire, la modification logicielle est annulée.

L'invention concerne également un produit programme d'ordinateur comportant des instructions de programme exploitables par le calculateur 11 automobile. Ces instructions lorsqu'elles sont exécutées ou interprétées par le calculateur 11 déclenchent la mise en œuvre du procédé pour la modification logicielle dans le véhicule automobile 10.

L'invention n'est pas limitée aux modes de réalisation et variantes présentées et d'autres modes de réalisation et variantes apparaîtront clairement à l'homme du métier.

Ainsi, les données générales de déploiement logiciel DGD et l'empreinte numérique ENum sont signées par deux clés privées différentes pour améliorer la protection informatique de l'ensemble contre le piratage.

Ainsi, le département de recherche du constructeur 371 ou l'usine du constructeur 372 ou le concessionnaire 373 utilise un couple de clé privée/clé publique déterminé pour obtenir de manière sécurisée le premier groupe de données et le second groupe de données. Ces données sont destinées à être chargées sur la clé USB 38.

Ainsi, le transfert du premier groupe de données et du second groupe de données entre le serveur 35 et le véhicule automobile 10 peut être réalisé via la technologie sans fil FOTA.

Ainsi un logiciel peut être mis à jour plusieurs fois au cours de la période d'utilisation du véhicule automobile. Il est alors possible d'implémenter des nouvelles techniques de hachage lors de ces mises à jour.

## Revendications

1. Procédé pour une modification logicielle dans un véhicule automobile (10), ledit procédé comprenant les étapes suivantes implémentées dans ledit véhicule automobile (10) :
- une étape de réception (E1) d'un premier groupe de données et d'un second groupe de données, ledit premier groupe de données comprenant des données logicielles (BIN), des données générales de déploiement logiciel (DGD), lesdites données générales de déploiement logiciel (DGD) ayant été signées par une autorité de contrôle principale (32), ledit second groupe de données comprenant des données spécifiques de déploiement logiciel (DSD), lesdites données spécifique de déploiement logiciel (DSD) étant des choix parmi les données générales de déploiement logiciel (DGD), lesdites données spécifiques de déploiement logiciel (DSD) ayant été signées par une autorité de contrôle secondaire (34) ;
- une première étape de vérification (E2) de la signature des données spécifiques de déploiement logiciel (DSD) ;
- le véhicule automobile comportant des caractéristiques propres (CP), une seconde étape de vérification (E3) de la compatibilité des données spécifiques de déploiement logiciel (DSD) avec lesdites caractéristiques propres (CP) du véhicule automobile ;
- une troisième étape de vérification (E4) de la signature des données générales de déploiement logiciel (DGD) ;
- une quatrième étape de vérification (E5) de la compatibilité des données spécifiques de déploiement logiciel (DSD) avec les données générales de déploiement logiciel (DGD) ;
- si la première étape de vérification (E2), la seconde étape de vérification (E3), la troisième étape de vérification (E4) et la quatrième étape de vérification (E5) sont validées, une étape de modification logicielle (E6) dans le véhicule automobile via les données logicielles (BIN) du premier groupe de données et
dans lequel les données générales de déploiement (DGD) du logiciel comprennent au moins un des critères suivants pour le déploiement du logiciel :
- un critère général d'espace (CGE) pour le déploiement logiciel ;
- un critère général de temps (CGT) pour le déploiement logiciel ;
- un critère général d'identification (CGI) pour l'identification des véhicules concernés par le déploiement logiciel.

2. Procédé selon l'une des revendications 1, dans lequel les données spécifiques (DSD) de déploiement du logiciel comprennent au moins un des critères suivants :
- un critère spécifique d'espace (CSE) pour le déploiement logiciel ;
- un critère spécifique de temps (CST) pour le déploiement logiciel ;
- un critère spécifique d'identification (CSI) pour l'identification des véhicules concernés par le déploiement logiciel.

3. Procédé selon la revendication 2, dans lequel le critère général d'espace (CGE) définit les lieux possibles dans lesquels le déploiement logiciel peut être effectif, tel que dans une usine, chez un concessionnaire, ou chez un particulier, et le critère spécifique d'espace (CSE) est un choix parmi ces différents lieux.

4. Procédé selon l'une quelconque des revendications 2 ou 3,
dans lequel le critère général de temps (CGT) définit les plages temporelles dans lesquelles le déploiement logiciel peut être effectif, et le critère spécifique d'espace (CSE) est un choix parmi ces différentes plages temporelles.

5. Procédé selon l'une quelconque des revendications 2 à 4, dans lequel le critère général d'identification (CGI) définit un type d'identifiant, tel qu'un numéro d'identification du véhicule (VIN) et le critère spécifique d'identification (CSI) est un choix d'un groupe d'identifiants pour ce type d'identifiant.

6. Procédé selon l'une quelconque des revendications 1 à 5, dans lequel le premier groupe de données comprend une empreinte numérique (ENum) des données logicielles, ladite empreinte numérique ayant été obtenue par une fonction de hachage et dans lequel cette empreinte numérique (ENum) est comparée à une empreinte numérique générée dans le véhicule automobile (10) à partir des données logicielles (BIN) pour la mise en œuvre de l'étape de modification logicielle (E6).

7. Procédé selon l'une quelconque des revendications 1 à 6, dans lequel les données générales de déploiement logiciel (DGD) sont signées avec une première clé privée (321) et la vérification de ladite signature est réalisée avec une première clé publique (1141) associée à ladite première clé privée et dans lequel les données spécifiques de déploiement logiciel sont signées avec une seconde clé privée (341) et la vérification de ladite signature est réalisée avec une seconde clé publique (1121) associée à ladite seconde clé privée.

8. Procédé selon l'une quelconque des revendications 1 à 7, dans lequel la modification logicielle correspond à l'introduction d'un nouveau logiciel et/ou la mise à jour d'un logiciel déjà embarqué dans ledit véhicule.

9. Procédé selon l'une quelconque des revendications 1 à 8, dans lequel la réception du premier groupe de données et la réception du second groupe de données se font par une connexion avec ledit véhicule automobile d'un support de stockage amovible, tel qu'une clé USB (38) et les données spécifiques (DSD) de déploiement du logiciel comprennent au moins un critère lié audit support de stockage amovible.

10. Calculateur (11) automobile destiné à être utilisé dans un véhicule automobile comprenant :
- des moyens de réception (111) d'un premier groupe de données et d'un second groupe de données, ledit premier groupe de données comprenant des données logicielles (BIN), des donnés générales de déploiement logiciel (DGD), lesdites données générales de déploiement logiciel (DGD) ayant été signées par une autorité de contrôle principale, lesdites données générales de déploiement (DGD) du logiciel comprenant au moins un des critères suivants pour le déploiement du logiciel :
- un critère général d'espace (CGE) pour le déploiement logiciel ;
- un critère général de temps (CGT) pour le déploiement logiciel ;
- un critère général d'identification (CGI) pour l'identification des véhicules concernés par le déploiement logiciel,
ledit second groupe de données comprenant des données spécifiques de déploiement logiciel (DSD), lesdites données spécifiques de déploiement logiciel (DSD) étant des choix parmi les donnes générales de déploiement logiciel (DGD), lesdites données spécifiques de déploiement logiciel (DSD) ayant été signées par une autorité de contrôle secondaire ;
- des moyens de vérification (112) de la signature des données spécifiques de déploiement logiciel (DSD) ;
- le véhicule automobile comportant des caractéristiques propres (CP), des moyens de vérification (113) de la compatibilité des données spécifiques de déploiement logiciel avec lesdites caractéristiques propres du véhicule automobile ;
- des moyens de vérification (114) de la signature des données générales de déploiement logiciel (DGD) ;
- des moyens de vérification (115) de la comptabilité des données spécifiques de déploiement logiciel (DSD) avec les données générales de déploiement logiciel (DGD) ;
- des moyens de modification logicielle (116) dans le véhicule automobile via les données logicielles (BIN) du premier groupe de données.

11. Produit programme d'ordinateur comportant des instructions de programme exploitables par le calculateur (11) automobile de la revendication 10, qui lorsqu'elles sont exécutées ou interprétées par ledit calculateur (11) déclenchent la mise en œuvre du procédé pour une modification logicielle dans un véhicule automobile selon l'une quelconque des revendications 1 à 9.

12. Support de stockage amovible destiné à être utilisé dans un véhicule automobile comprenant :
- des moyens de stockage d'un premier groupe de données et d'un second groupe de données, ledit premier groupe de données comprenant des données logicielles (BIN), des données générales de déploiement logiciel (DGD), lesdites données générales de déploiement logiciel ayant été signées par une autorité de contrôle principale (32), lesdites données générales de déploiement (DGD) du logiciel comprenant au moins un des critères suivants pour le déploiement du logiciel :
- un critère général d'espace (CGE) pour le déploiement logiciel ;
- un critère général de temps (CGT) pour le déploiement logiciel ;
- un critère général d'identification (CGI) pour l'identification des véhicules concernés par le déploiement logiciel,
ledit second groupe de données comprenant des données spécifiques de déploiement logiciel (DSD), lesdites données spécifiques de déploiement logiciel (DSD) étant des choix parmi les donnes générales de déploiement logiciel (DGD), lesdites données spécifiques de déploiement logiciel ayant été signées par une autorité de contrôle secondaire (34) ;
- des moyens de transfert du premier groupe de données et du second groupe de données vers le véhicule automobile (10), la signature des données spécifiques de déploiement logiciel étant destinée à être vérifiée dans ledit véhicule automobile dans une première étape de vérification (E2), les données spécifiques de déploiement (DSD) du logiciel étant destinées à être vérifiées pour évaluer leur compatibilité avec des caractéristiques propres du véhicule automobile dans une seconde étape de vérification (E3), la signature des données générales de déploiement logiciel étant destinée à être vérifiée dans ledit véhicule automobile dans une troisième étape de vérification (E4), les données spécifiques de déploiement logiciel (DSD) et les données générales de déploiement logiciel (DGD) étant destinées à être vérifiées pour évaluer leur compatibilité dans une quatrième étape de vérification (E5), les données logicielles du premier groupe de données étant destinées à effectuer une modification logicielle (E6) dans le véhicule automobile (10) si la première étape de vérification (E2), la seconde étape de vérification (E3), la troisième étape de vérification (E4) et la quatrième étape de vérification (E5) sont validées.

## Patentansprüche

1. Verfahren für eine Softwareänderung in einem Kraftfahrzeug (10), das Verfahren umfassend die folgenden Schritte, die in dem Kraftfahrzeug (10) implementiert werden:
- einen Schritt zum Empfangen (E1) einer ersten Datengruppe und einer zweiten Datengruppe, wobei die erste Datengruppe Softwaredaten (BIN) und allgemeine Softwarebereitstellungsdaten (DGD) umfasst, wobei die allgemeinen Softwarebereitstellungsdaten (DGD) von einer Hauptkontrollbehörde (32) signiert wurden, wobei die zweite Datengruppe spezifische Softwarebereitstellungsdaten (DSD) umfasst, wobei die spezifischen Softwarebereitstellungsdaten (DSD) eine Auswahl aus den allgemeinen Softwarebereitstellungsdaten (DGD) sind, wobei die spezifischen Softwarebereitstellungsdaten (DSD) von einer zweiten Kontrollbehörde (34) signiert wurden;
- einen ersten Schritt zur Überprüfung (E2) der Signatur der spezifischen Softwarebereitstellungsdaten (DSD);
- wobei das Kraftfahrzeug eigene Merkmale (CP) aufweist, einen zweiten Schritt zur Überprüfung (E3) der Kompatibilität der spezifischen Softwarebereitstellungsdaten (DSD) mit den eigenen Merkmalen (CP) des Kraftfahrzeugs;
- einen dritten Schritt zur Überprüfung (E4) der Signatur der allgemeinen Softwarebereitstellungsdaten (DGD);
- einen vierten Schritt zur Überprüfung (E5) der Kompatibilität der spezifischen Softwarebereitstellungsdaten (DSD) mit den allgemeinen Softwarebereitstellungsdaten (DGD);
- wenn der erste Schritt zur Überprüfung (E2), der zweite Schritt zur Überprüfung (E3), der dritte Schritt zur Überprüfung (E4) und der vierte Schritt zur Überprüfung (E5) validiert sind, einen Schritt zur Softwareänderung (E6) in dem Kraftfahrzeug über die Softwaredaten (BIN) der ersten Datengruppe und
wobei die allgemeinen Softwarebereitstellungsdaten (DGD) mindestens eines der folgenden Kriterien für die Softwarebereitstellung umfassen:
- ein allgemeines Raumkriterium (CGE) für die Softwarebereitstellung;
- ein allgemeines Zeitkriterium (CGT) für die Softwarebereitstellung;
- ein allgemeines Identifikationskriterium (CGI) für die Identifizierung der von der Softwarebereitstellung betroffenen Fahrzeuge.

2. Verfahren nach einem der Ansprüche 1, wobei die spezifischen Softwarebereitstellungsdaten (DSD) mindestens eines der folgenden Kriterien umfassen:
- ein spezifisches Raumkriterium (CSE) für die Softwarebereitstellung;
- ein spezifisches Zeitkriterium (CST) für die Softwarebereitstellung;
- ein spezifisches Identifikationskriterium (CSI) für die Identifizierung der von der Softwarebereitstellung betroffenen Fahrzeuge.

3. Verfahren nach Anspruch 2, wobei das allgemeine Raumkriterium (CGE) die möglichen Orte definiert, an denen die Softwarebereitstellung wirksam sein kann, wie beispielsweise in einer Fabrik, bei einem Händler oder bei einer Privatperson, und das spezifische Raumkriterium (CSE) eine Auswahl aus diesen verschiedenen Orten ist.

4. Verfahren nach einem der Ansprüche 2 oder 3, wobei das allgemeine Zeitkriterium (CGT) die Zeiträume definiert, in denen die Softwarebereitstellung wirksam sein kann, und das spezifische Raumkriterium (CSE) eine Auswahl aus diesen verschiedenen Zeiträumen ist.

5. Verfahren nach einem der Ansprüche 2 bis 4, wobei das allgemeine Identifikationskriterium (CGI) einen Identifikationstyp definiert, wie beispielsweise eine Fahrzeugidentifikationsnummer (VIN), und das spezifische Identifikationskriterium (CSI) eine Auswahl aus einer Gruppe von Identifikatoren für diesen Identifikationstyp ist.

6. Verfahren nach einem der Ansprüche 1 bis 5, wobei die erste Datengruppe einen digitalen Fingerabdruck (ENum) der Softwaredaten umfasst, wobei der digitale Fingerabdruck durch eine Hash-Funktion erhalten wurde, und wobei dieser digitale Fingerabdruck (ENum) mit einem digitalen Fingerabdruck verglichen wird, der in dem Kraftfahrzeug (10) aus den Softwaredaten (BIN) zur Durchführung des Schritts zur Softwareänderung (E6) erzeugt wurde.

7. Verfahren nach einem der Ansprüche 1 bis 6, wobei die allgemeinen Softwarebereitstellungsdaten (DGD) mit einem ersten privaten Schlüssel (321) signiert sind und die Überprüfung der Signatur mit einem ersten öffentlichen Schlüssel (1141) erfolgt, der dem ersten privaten Schlüssel zugeordnet ist, und wobei die spezifischen Softwarebereitstellungsdaten mit einem zweiten privaten Schlüssel (341) signiert sind und die Überprüfung dieser Signatur mit einem zweiten öffentlichen Schlüssel (1121) erfolgt, der dem zweiten privaten Schlüssel zugeordnet ist.

8. Verfahren nach einem der Ansprüche 1 bis 7, wobei die Softwareänderung dem Einfügen einer neuen Software und/oder dem Aktualisieren einer bereits in dem Fahrzeug installierten Software entspricht.

9. Verfahren nach einem der Ansprüche 1 bis 8, wobei der Empfang der ersten Datengruppe und der Empfang der zweiten Datengruppe über eine Verbindung mit dem Kraftfahrzeug von einem Wechselspeichermedium, wie beispielsweise einem USB-Stick (38), erfolgt und die spezifischen Daten (DSD) zur Softwarebereitstellung mindestens ein Kriterium umfassen, das mit dem Wechselspeichermedium in Verbindung steht.

10. Kraftfahrzeugrechner (11) zur Verwendung in einem Kraftfahrzeug, umfassend:
- Mittel zum Empfang (111) einer ersten Datengruppe und einer zweiten Datengruppe, wobei die erste Datengruppe Softwaredaten (BIN), allgemeine Softwarebereitstellungsdaten (DGD) umfasst, wobei die allgemeinen Softwarebereitstellungsdaten (DGD) von einer Hauptkontrollbehörde signiert wurden, wobei die allgemeinen Softwarebereitstellungsdaten (DGD) mindestens eines der folgenden Kriterien für die Softwarebereitstellung umfassen:
- ein allgemeines Raumkriterium (CGE) für die Softwarebereitstellung;
- ein allgemeines Zeitkriterium (CGT) für die Softwarebereitstellung;
- ein allgemeines Identifikationskriterium (CGI) für die Identifizierung der von der Softwarebereitstellung betroffenen Fahrzeuge,
wobei die zweite Datengruppe spezifische Softwarebereitstellungsdaten (DSD) umfasst, wobei die spezifischen Softwarebereitstellungsdaten (DSD) eine Auswahl aus den allgemeinen Softwarebereitstellungsdaten (DGD) sind, wobei die spezifischen Softwarebereitstellungsdaten (DSD) von einer zweiten Kontrollbehörde signiert wurden;
- Mittel zur Überprüfung (112) der Signatur der spezifischen Softwarebereitstellungsdaten (DSD);
- wobei das Kraftfahrzeug eigene Merkmale (CP), Mittel zur Überprüfung (113) der Kompatibilität der spezifischen Daten für die Softwarebereitstellung mit den eigenen Merkmalen des Kraftfahrzeugs aufweist;
- Mittel zur Überprüfung (114) der Signatur der allgemeinen Softwarebereitstellungsdaten (DGD);
- Mittel zur Überprüfung (115) der Kompatibilität der spezifischen Softwarebereitstellungsdaten (DSD) mit den allgemeinen Softwarebereitstellungsdaten (DGD);
- Mittel zur Softwareänderung (116) in dem Kraftfahrzeug über die Softwaredaten (BIN) der ersten Datengruppe.

11. Computerprogrammprodukt, aufweisend Programmbefehle, die von dem Kraftfahrzeugrechner (11) nach Anspruch 10 ausgewertet werden können, die bei Ausführung oder Interpretation durch den Rechner (11) die Durchführung des Verfahrens zur Softwareänderung in einem Kraftfahrzeug nach einem der Ansprüche 1 bis 9 auslösen.

12. Wechselspeichermedium zur Verwendung in einem Kraftfahrzeug, umfassend:
- Mittel zum Speichern einer ersten Datengruppe und einer zweiten Datengruppe, wobei die erste Datengruppe Softwaredaten (BIN), allgemeine Softwarebereitstellungsdaten (DGD) umfasst, wobei die allgemeinen Softwarebereitstellungsdaten von einer Hauptkontrollbehörde (32) signiert wurden, wobei die allgemeinen Softwarebereitstellungsdaten (DGD) mindestens eines der folgenden Kriterien für die Softwarebereitstellung umfassen:
- ein allgemeines Raumkriterium (CGE) für die Softwarebereitstellung;
- ein allgemeines Zeitkriterium (CGT) für die Softwarebereitstellung;
- ein allgemeines Identifikationskriterium (CGI) für die Identifizierung der von der Softwarebereitstellung betroffenen Fahrzeuge,
wobei die zweite Datengruppe spezifische Softwarebereitstellungsdaten (DSD) umfasst, wobei die spezifischen Softwarebereitstellungsdaten (DSD) eine Auswahl aus den allgemeinen Softwarebereitstellungsdaten (DGD) sind, wobei die spezifischen Softwarebereitstellungsdaten von einer zweiten Kontrollbehörde (34) signiert wurden;
- Mittel zur Übertragung der ersten Datengruppe und der zweiten Datengruppe an das Kraftfahrzeug (10), wobei die Signatur der spezifischen Softwarebereitstellungsdaten dazu bestimmt ist, in dem Kraftfahrzeug in einem ersten Schritt zur Überprüfung (E2) überprüft zu werden, wobei die spezifischen Softwarebereitstellungsdaten (DSD) dazu bestimmt sind, in einem zweiten Schritt zur Überprüfung (E3) auf ihre Kompatibilität mit den eigenen Merkmalen des Kraftfahrzeugs überprüft zu werden, wobei die Signatur der allgemeinen Softwarebereitstellungsdaten in einem dritten Schritt zur Überprüfung (E4) in dem Kraftfahrzeug überprüft wird, wobei die spezifischen Softwarebereitstellungsdaten (DSD) und die allgemeinen Softwarebereitstellungsdaten (DGD) in einem vierten Schritt zur Überprüfung (E5) auf ihre Kompatibilität überprüft werden, wobei die Softwaredaten der ersten Datengruppe dazu bestimmt sind, eine Softwareänderung (E6) in dem Kraftfahrzeug (10) auszuführen, wenn der erste Schritt zur Überprüfung (E2), der zweite Schritt zur Überprüfung (E3), der dritte Schritt zur Überprüfung (E4) und der vierte Schritt zur Überprüfung (E5) validiert sind.

## Claims

1. Method for bringing about a software modification in a motor vehicle (10), said method comprising the following steps implemented in said motor vehicle (10):
- a step (E1) of receiving a first data group and a second data group, said first data group comprising software data (BIN) and general software-deployment data (DGD), said general software-deployment data (DGD) having been signed by a primary supervisory authority (32), said second data group comprising specific software-deployment data (DSD), said specific software-deployment data (DSD) being choices among the general software-deployment data (DGD), said specific software-deployment data (DSD) having been signed by a secondary supervisory authority (34);
- a first step (E2) of verifying the signature of the specific software-deployment data (DSD);
- the motor vehicle having specific characteristics (CP), a second step (E3) of verifying the compatibility of the specific software-deployment data (DSD) with said specific characteristics (CP) of the motor vehicle;
- a third step (E4) of verifying the signature of the general software-deployment data (DGD);
- a fourth step (E5) of verifying the compatibility of the specific software-deployment data (DSD) with the general software-deployment data (DGD);
- if the first verifying step (E2), the second verifying step (E3), the third verifying step (E4) and the fourth verifying step (E5) are validated, a step (E6) of modifying software in the motor vehicle via the software data (BIN) of the first data group and
wherein the general deployment data (DGD) of the software comprise at least one of the following criteria for deployment of the software:
- a general space criterion (CGE) for software deployment;
- a general time criterion (CGT) for software deployment;
- a general identification criterion (CGI) for identifying the vehicles concerned by the software deployment.

2. Method according to one of Claims 1, wherein the specific deployment data (DSD) of the software comprise at least one of the following criteria:
- a specific space criterion (CSE) for software deployment;
- a specific time criterion (CST) for software deployment;
- a specific identification criterion (CSI) for identifying the vehicles concerned by the software deployment.

3. Method according to Claim 2, wherein the general space criterion (CGE) defines the possible locations in which software deployment may be carried out, such as in a factory, at a dealership, or at an individual's home, and the specific space criterion (CSE) is a choice among these various locations.

4. Method according to either one of Claims 2 and 3, wherein the general time criterion (CGT) defines the time ranges in which software deployment may be carried out, and the specific space criterion (CSE) is a choice among these various time ranges.

5. Method according to any one of Claims 2 to 4, wherein the general identification criterion (CGI) defines a type of identifier, such as a vehicle identification number (VIN), and the specific identification criterion (CSI) is a choice of a group of identifiers for this type of identifier.

6. Method according to any one of Claims 1 to 5, wherein the first data group comprises a digital fingerprint (ENum) of the software data, said digital fingerprint having been obtained by a hash function and wherein this digital fingerprint (ENum) is compared with a digital fingerprint generated in the motor vehicle (10) from the software data (BIN) with a view to implementing the software-modifying step (E6).

7. Method according to any one of Claims 1 to 6, wherein the general software-deployment data (DGD) are signed with a first private key (321) and said signature is verified with a first public key (1141) associated with said first private key and wherein the specific software-deployment data are signed with a second private key (341) and said signature is verified with a second public key (1121) associated with said second private key.

8. Method according to any one of Claims 1 to 7, wherein the software modification corresponds to introduction of new software and/or to update of software already installed in said vehicle.

9. Method according to any one of Claims 1 to 8, wherein the first data group and the second data group are received by connecting, to said motor vehicle, a removable storage medium such as a USB key (38), and the specific deployment data (DSD) of the software comprise at least one criterion related to said removable storage medium.

10. Automotive computer (11) intended to be used in a motor vehicle, comprising:
- means (111) for receiving a first data group and a second data group, said first data group comprising software data (BIN) and general software-deployment data (DGD), said general software-deployment data (DGD) having been signed by a primary supervisory authority, said general deployment data (DGD) of the software comprising at least one of the following criteria for software deployment:
- a general space criterion (CGE) for software deployment;
- a general time criterion (CGT) for software deployment;
- a general identification criterion (CGI) for identifying the vehicles concerned by the software deployment,
said second data group comprising specific software-deployment data (DSD), said specific software-deployment data (DSD) being choices among the general software-deployment data (DGD), said specific software-deployment data (DSD) having been signed by a secondary supervisory authority;
- means (112) for verifying the signature of the specific software-deployment data (DSD);
- the motor vehicle having specific characteristics (CP), means (113) for verifying the compatibility of the specific software-deployment data with said specific characteristics of the motor vehicle;
- means (114) for verifying the signature of the general software-deployment data (DGD);
- means (115) for verifying the compatibility of the specific software-deployment data (DSD) with the general software-deployment data (DGD);
- means (116) for modifying software in the motor vehicle via the software data (BIN) of the first data group.

11. Computer program product comprising program instructions that are exploitable by the automotive computer (11) of Claim 10, which, when they are executed or interpreted by said computer (11), trigger implementation of the method for bringing about a software modification in a motor vehicle according to any one of Claims 1 to 9.

12. Removable storage medium intended to be used in a motor vehicle, comprising:
- means for storing a first data group and a second data group, said first data group comprising software data (BIN) and general software-deployment data (DGD), said general software-deployment data having been signed by a primary supervisory authority (32), said general deployment data (DGD) of the software comprising at least one of the following criteria for software deployment:
- a general space criterion (CGE) for software deployment;
- a general time criterion (CGT) for software deployment;
- a general identification criterion (CGI) for identifying the vehicles concerned by the software deployment,
said second data group comprising specific software-deployment data (DSD), said specific software-deployment data (DSD) being choices among the general software-deployment data (DGD), said specific software-deployment data having been signed by a secondary supervisory authority (34);
- means for transferring the first data group and the second data group to the motor vehicle (10), the signature of the specific software-deployment data being intended to be verified in said motor vehicle in a first verifying step (E2), the specific deployment data (DSD) of the software being intended to be verified in order to assess their compatibility with specific characteristics of the motor vehicle in a second verifying step (E3), the signature of the general software-deployment data being intended to be verified in said motor vehicle in a third verifying step (E4), the specific software-deployment data (DSD) and the general software-deployment data (DGD) being intended to be verified in order to assess their compatibility in a fourth verifying step (E5), the software data of the first data group being intended to perform a software modification (E6) in the motor vehicle (10) if the first verifying step (E2), the second verifying step (E3), the third verifying step (E4) and the fourth verifying step (E5) are validated.
